# EUROPEAN PATENT SPECIFICATION

(11) **EP 2 281 738 B1**
(45) Date of publication and mention of the grant of the patent: **04.06.2014**
(21) Application number: 10171173.7
(22) Date of filing: 29.07.2010
(51) Int. Cl.: B62K 11/14, B62K 23/02, H01H 9/18

(54) **Switch unit for a motorcycle**
Schalteinheit für ein Motorrad
Unité de commutation pour motocyclette

(30) Priority: 04.08.2009 JP 2009181961
(43) Date of publication of application: 09.02.2011
(73) Proprietor: Yamaha Hatsudoki Kabushiki Kaisha, Iwata-shi, Shizuoka 438-8501 (JP)
(72) Inventor: Isayama, Hiroyuki, Shizuoka-ken (JP)
(74) Representative: Grünecker, Kinkeldey, Stockmair & Schwanhäusser

(56) References cited:
- EP-A2- 1 321 955
- US-A1- 2002 108 801

## Description

### BACKGROUND OF THE INVENTION

### Field of the Invention

The present invention relates to switch units and motorcycles, and more specifically to a switch unit having backlit marks, and a motorcycle including the same.

### Description of the Related Art

A handlebar of a motorcycle is provided with switch units, which include a plurality of switches connected with a plurality of electric components (such as a head light, and flashers for indicating the direction in which the motorcycle is turning). The switch unit is composed, for example, of a case in which the switches are placed, and operation members (such as operation buttons) which are fitted into openings in the case. The operation members are operated by the motorcycle rider to turn on and off the switches which are disposed behind the operation members.

For example, JP-A 2006-96211 discloses a switch unit provided with an operation button which has a backlit mark. In this switch unit, a portion of the operation button which represents the mark is formed of a translucent material, and a switch and an LED (Light Emitting Diode) are disposed behind the operation button. Light from the LED passes through the translucent material, and so the mark is lit.

However, the above-described conventional switch unit has the following problems: Specifically, in the above-described switch unit, it is difficult to let a sufficient amount of light to be emitted from the mark because only the mark portion is formed of the translucent material. For example, if a highly transparent material is used as the translucent material only for the region which represents the mark, the amount of light emitted from the mark can be extremely small depending on the angle of incidence of the light when it enters the translucent material. As a solution to this problem, a colored material may be used as the translucent material only for the mark region. In this case, light which enters the translucent material scatters within the translucent material. However, in this case, the amount of light which has made entry into the translucent material is decreased by the time the light reaches the translucent material's outer surface. Therefore, the amount of light emitted from the mark is greatly reduced from the amount of light which has entered the translucent material. The above discussion suggests that it is necessary to dispose the LED at an appropriate position with respect to the mark in order to make sure that a sufficient amount of light is to be emitted from the mark in cases where only the mark region is formed of a translucent material. Therefore, in the above-described switch unit, freedom in LED positioning is extremely low. Further, in the above-described switch unit, the mark is formed in the operation button, and the switch is disposed behind the operation button. In this case, if a sufficient amount of light is to be emitted from the mark, the LED must be disposed behind the operation button, avoiding the switch. Specifically, in the above-described switch unit, the switch is an obstacle which poses a great limitation in selecting the position for the LED.

Document EP 1 321 955 discloses a device according to the preamble of claim 1.

### SUMMARY OF THE INVENTION

Therefore, a primary object of the present invention is to provide a switch unit which is capable of increasing the amount of light emitted from the mark and has improved design freedom, as well as to provide a motorcycle including the switch unit.

According to an aspect of the present invention, there is provided a switch unit which includes: a switch; a light source; a switch case for housing the switch and the light source; and an operation member provided in the switch case for activating the switch. With this arrangement, the switch case includes a transmissive portion which allows light to pass through, and a first light shielding portion provided in an outer surface of the transmissive portion for reducing translucency. The outer surface of the transmissive portion has a first region which is not provided with the first light shielding portion, and the first region provides a mark associated with a function of the operation member.

In the present invention, the switch case has the transmissive portion which allows light to pass through; and the first light shielding portion which reduces translucency and is provided in the outer surface of the transmissive portion. With this arrangement, the outer surface of the transmissive portion has the first region which is not provided with the first light shielding portion, and this first region provides the mark associated with a function of the operation member. Specifically, in the present invention, portions which do not constitute the mark are also provided by the transmissive portion. In this case, the arrangement allows a sufficient amount of light to make entry from the light source into the transmissive portion, enabling sufficient increase to be made in the amount of light which is emitted from the first region (the mark) in the outer surface of the transmissive portion. Thus, the arrangement can illuminate the mark with a sufficient amount of light.

Also, since the arrangement allows a sufficient amount of light to make entry from the light source into the transmissive portion, it is possible to let the mark emit a sufficient amount of light even if the light source is not disposed in a proximity to the mark. Thus, the arrangement increases freedom in positioning the light source. Further, since the mark is formed in the switch case, it is not necessary to dispose the light source behind the operation member (at a position opposing to the operation member) even in cases where the light source is disposed behind the mark (at a position opposing to the mark). Therefore, the arrangement increases freedom in selecting locations for the light source even in cases where the switch is disposed behind the operation member, since the switch is not an obstacle. As a result of these, the arrangement increases design freedom of the switch unit.

It should be noted here that the term a "mark associated with a function of the operation member" means a mark indicating an event to be caused by an operation of the operation member which is associated with an electric component (such as a headlight, a pair of flashers and a warning horn), for example.

Preferably, the switch case is penetrable by a handlebar of a motorcycle, and the light source is disposed in a region within the switch case not to be penetrated by the handlebar. In this case, the light source will not be an obstacle when mounting the switch case to the handlebar. The arrangement makes it easy to mount the switch case to the handlebar. It should be noted here that the "switch case which is penetrable by a handlebar" includes a switch case which is constituted by a plurality of members assembled with each other to surround an outer circumferential surface of the handlebar. Also, the "region within the switch case not to be penetrated by the handlebar" refers to a space which is not to be occupied by the handlebar when the switch case is mounted to the handlebar.

Preferably, the transmissive portion contains a material capable of scattering light which travels through the transmissive portion. In this case, light from the light source enters the transmissive portion and then scatters while travelling through the transmissive portion. Therefore, even if light from the light source has made its entry at an oblique angle with respect to the inner surface of the transmissive portion, the light gets scattered within the transmissive portion, and is brought to the mark. Also, light which has entered the transmissive portion from positions on the inner surface away from the mark gets scattered in the transmissive portion, and is brought to the mark. As a result of these, it is now possible to bring a sufficient amount of light to the mark and therefore a sufficient amount of light is emitted from the mark.

Preferably, the switch case includes a first case portion and a second case portion. The first case portion includes the transmissive portion and the first light shielding portion. The first case portion and the second case portion are assemblable with each other to sandwich a handlebar of a motorcycle. In this case, sandwiching the handlebar with the first case portion and the second case portion makes it easy to mount the switch case to the handlebar.

Preferably, the first case portion and the second case portion sandwich the handlebar from behind and front of the handlebar. In this case, the arrangement allows the first case portion and the second case portion to have a large height (dimension in an up-down direction). Therefore, it is possible to make a sufficient area available for formation of the mark in the outer surface of the first case portion in an arrangement, for example, where the first case portion is disposed behind the handlebar (so as to face the motorcycle rider). This makes it easy to make the mark.

Preferably, the switch case as assembled to the handlebar positions the light source above the handlebar. In this case, the arrangement reduces a potential problem that water trapped at the bottom inside the switch case will flood the light source, since the arrangement allows the light source to be above the handlebar inside the switch case.

Preferably, the second case portion contains a material capable of reducing translucency to a level lower than that of the transmissive portion. In this case, there is no need to provide a light shielding portion in the second case portion since the arrangement can reduce passing of light from the light source through the second case portion. This makes it possible to manufacture the switch unit at a low cost.

The switch case includes a second light shielding portion which is provided in an inner surface of the transmissive portion, for reducing translucency. In this case, the second light shielding portion reduces a problem that partial loss of the first light shielding portion will allow the light to escape from the region in the outer surface of the transmissive portion where the first light shielding portion has been partially lost.

The inner surface of the transmissive portion includes a second region which is opposed to the first region, and the second region is not provided with the second light shielding portion and has a greater area than the first region. In this case, light from the light source is collected by the second region which is larger than the mark (the first region) . This makes it possible to bring a sufficient amount of light to the mark (the first region). This enables a sufficient amount of light to be emitted from the mark (the first region).

Preferably, the light source is capped. This protects the light source from water, etc.

Preferably, the switch case is provided with a plurality of the operation members, and the outer surface of the transmissive portion has a plurality of the first regions for providing a plurality of marks associated with functions of the operation members. In this case, the arrangement makes it possible to let the marks (a plurality of the first regions) emit sufficient amount of light, using a common source of light.

Preferably, the light source is not opposed to the operation member. In this case, the arrangement makes it easy to mount the light source since the operation member is not an obstacle.

Preferably, the switch is opposed to the operation member. In this case, the arrangement allows the switch to be disposed in close proximity to the operation member within the switch case, making it possible to provide an increased space for the light source within the switch case, thereby further increasing the freedom in the light source positioning.

According to another aspect of the present invention, a motorcycle which includes the switch unit described above is provided. In switch units which are provided on a handlebar of a motorcycle, in general, it is desirable that marks associated with functions of switch operation members should be lit with a sufficient amount of light in order to help the rider recognize positions of the switch operation members at night for example. In order to provide switch units on the handlebar of the motorcycle, the switch units must be designed with consideration to the position of the handlebar. Therefore, a position of the light source within the switch unit must also be determined with consideration to the position of the handlebar. For these reasons, the switch unit, which is capable of emitting a sufficient amount of light from the mark and has a high level of freedom in the light source positioning as described, is suitably applicable to motorcycles.

The above-described object and other objects, characteristics, aspects and advantages of the present invention will become clearer from the following detailed description of embodiments of the present invention with reference to the attached drawings.

### BRIEF DESCRIPTION OF THE DRAWINGS

Fig. 1 is a side view of a motorcycle according to an embodiment of the present invention.
Fig. 2 shows a handlebar and switch units of the motorcycle.
Fig. 3 is an enlarged view, showing the switch unit as viewed from behind.
Fig. 4 is a perspective view of the switch unit and a choke lever. Fig. 4 shows the switch unit in an exploded perspective view.
Fig. 5 is a partial sectional view taken in lines V-V in Fig. 3.
Fig. 6 is an enlarged view, showing a first case portion and the choke lever as viewed from front.
Fig. 7 is an enlarged view, showing a portion of an outer surface of the first case portion where a mark is provided.
Fig. 8 is an enlarged view, showing a portion of an inner surface of the first case portion corresponding to the mark.

### DETAILED DESCRIPTION OF THE PREFERRED EMBODIMENTS

Hereinafter, preferred embodiments of the present invention will be described with reference to the drawings. It should be noted here that the description to be made hereinafter covers a motorcycle which has switch units according to embodiments of the present invention. It is noted that the terms right and left, front and rear, up and down as used in this embodiment are determined from the rider's position on a seat 36 of a motorcycle 10, with the rider facing toward a handlebar 18.

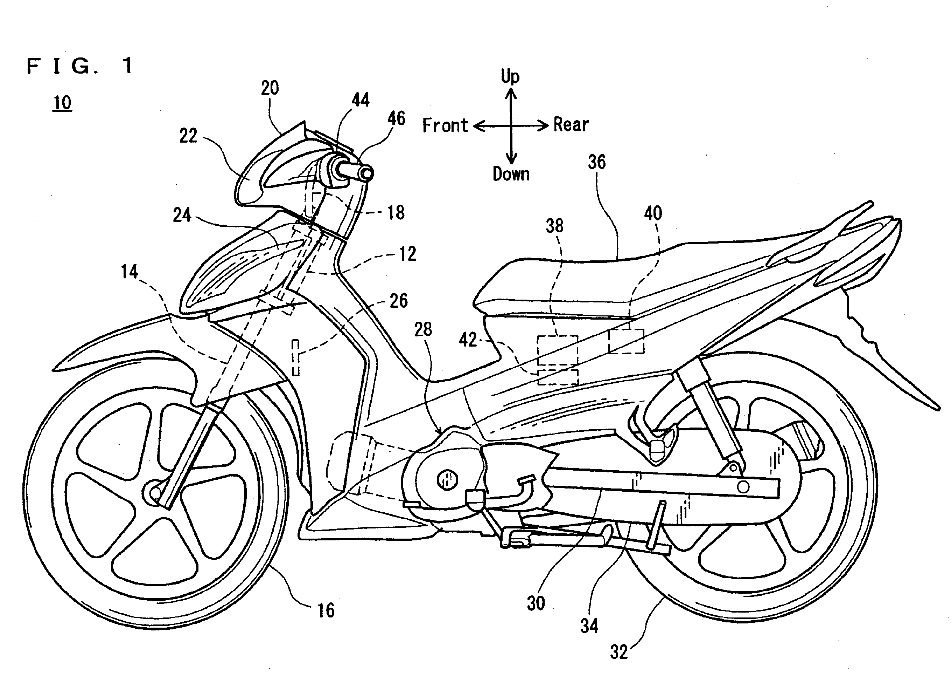

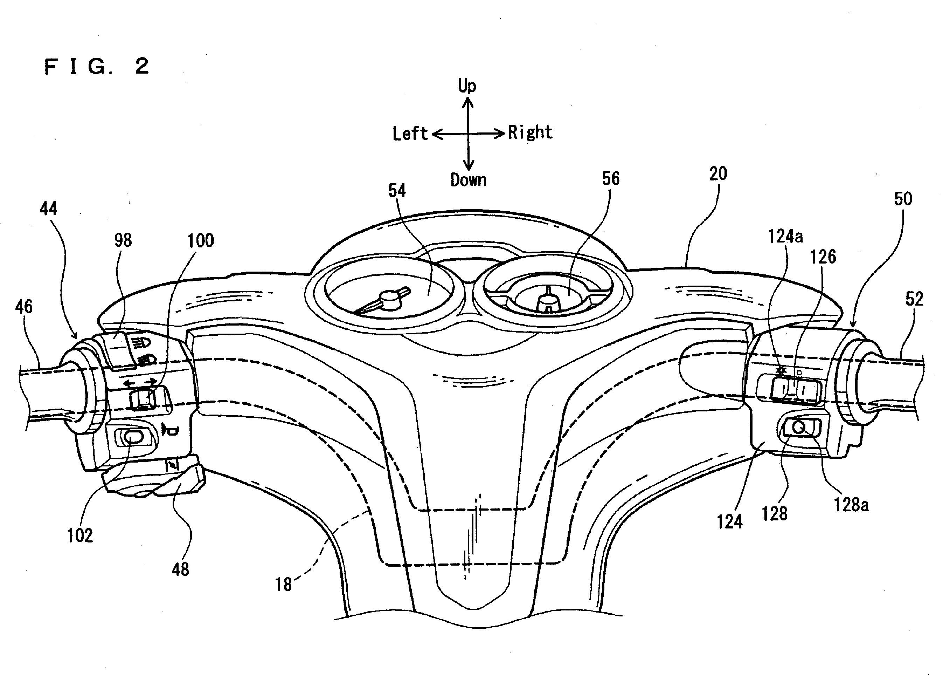

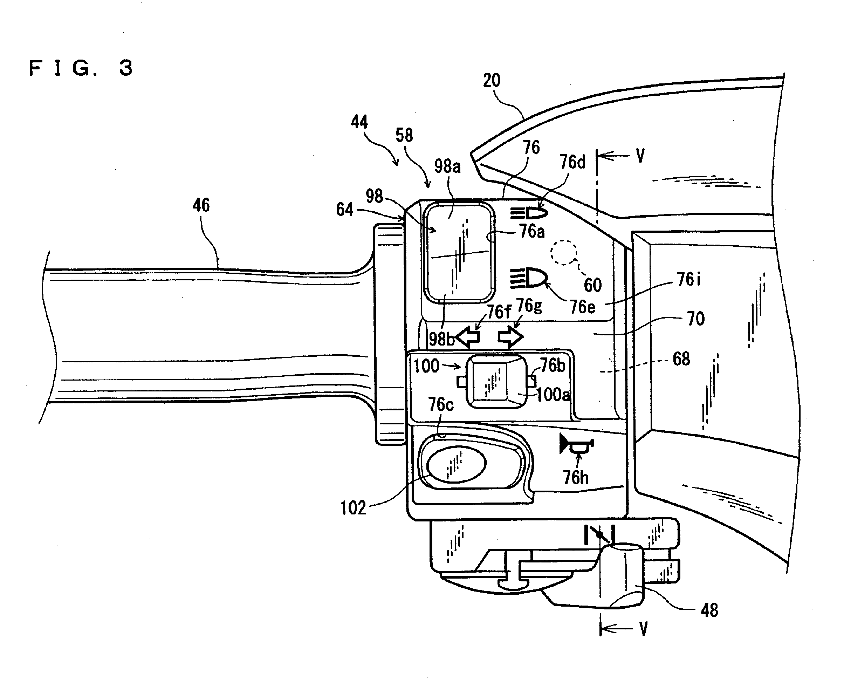

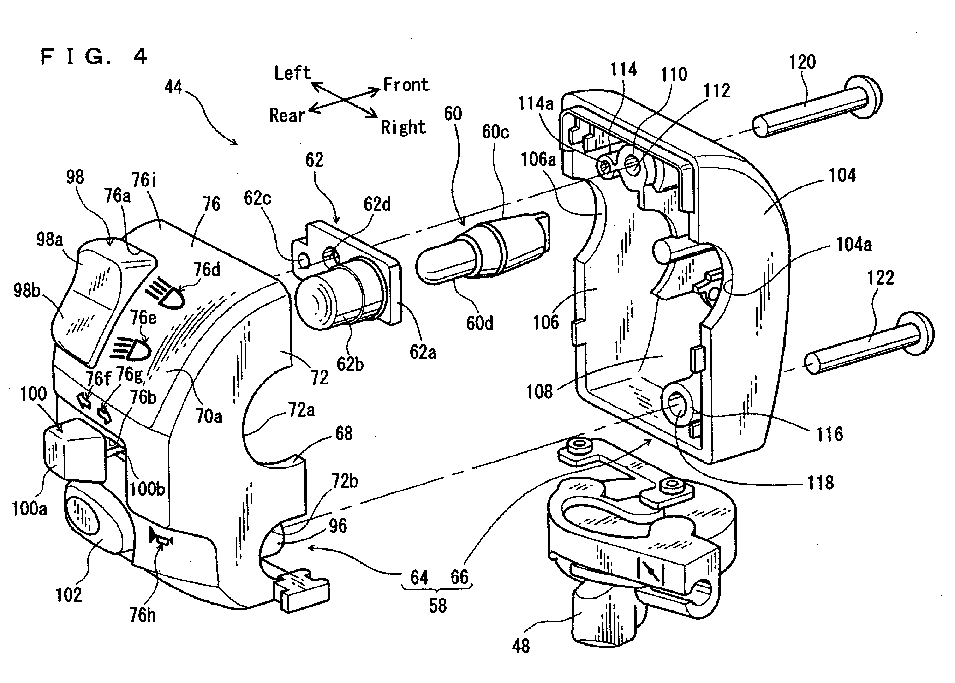

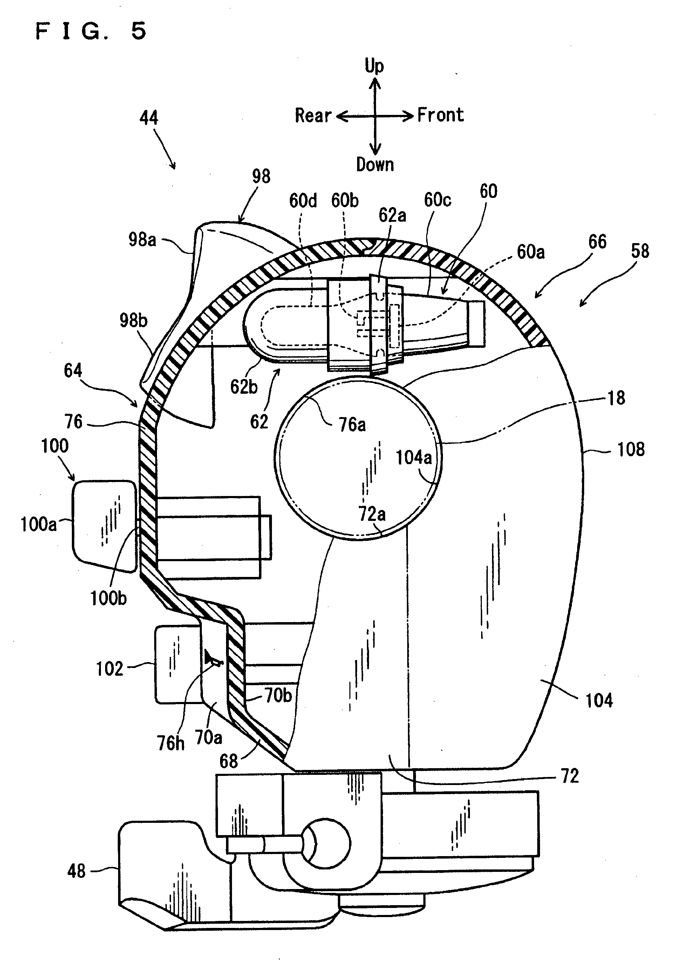

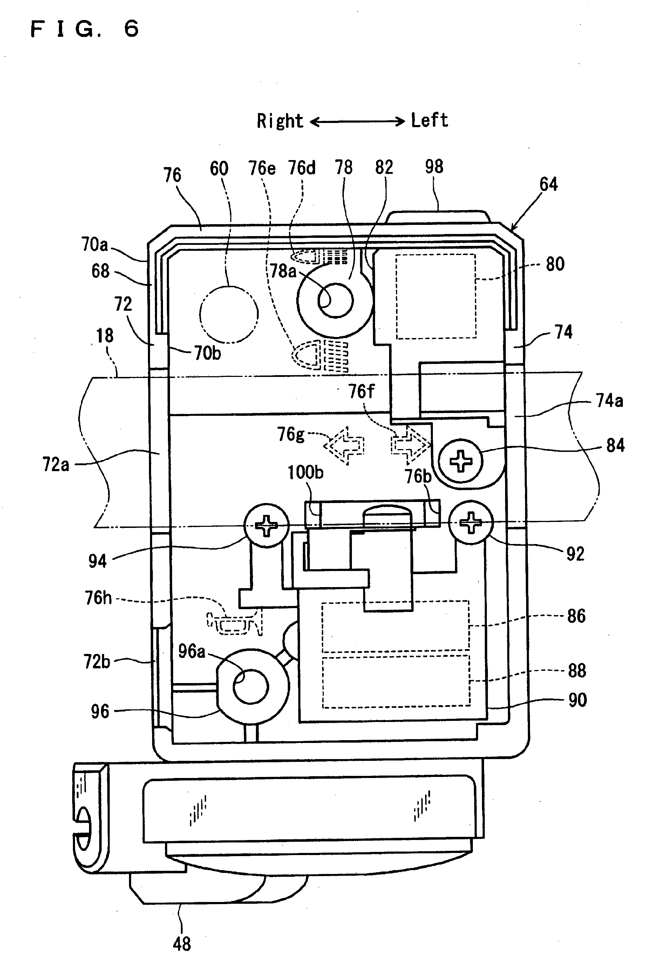

Fig. 1 is a side view of the motorcycle 10. Fig. 2 shows the handlebar 18 and switch units 44, 50 of the motorcycle 10, with the handlebar 18 and the switch units 44, 50 viewed from behind. Fig. 3 is an enlarged view of the switch unit 44, showing the switch unit 44 as viewed from behind. Fig. 4 is a perspective view of the switch unit 44 and a choke lever 48. Fig. 4 shows the switch unit 44 in an exploded perspective view. Fig. 5 is a partial sectional view taken in lines V-V in Fig. 3. Fig. 6 is an enlarged view of a first case portion 64 and the choke lever 48, showing the first case portion 64 and the choke lever 48 as viewed from front.

Referring to Fig. 1, the motorcycle 10 has a steering shaft 12. The steering shaft 12 is rotatably supported by a head pipe (not illustrated) provided at a front end of a motorcycle frame (not illustrated). The steering shaft 12 supports a front fork 14. The front fork 14 has a lower end portion, which supports a front wheel 16 rotatably. The front fork 14 has an upper end portion provided with the handlebar 18 extending in a right-left direction. The handlebar 18 is pivotable, together with the front fork 14 and the front wheel 16 in a right-left direction about a pivotal axis provided by the steering shaft 12. The handlebar 18 will be detailed later.

The handlebar 18 is covered by a handlebar cover 20. A headlight 22 is provided ahead of the handlebar 18 in the handlebar cover 20 for casting light in a forward direction. Below the headlight 22, a pair of flashers 24 are provided, one on the right side and the other on the left, to signal the direction in which the motorcycle is turning (Fig. 1 shows only one flasher 24 on the left side). Below the flashers 24, a warning horn 26 is provided to give a warning sound.

Behind the front wheel 16, the motorcycle frame (not illustrated) supports an engine 28. Behind the engine 28, a swing arm 30 extends rearward. The swing arm 30 has a front end portion (not illustrated), which is supported pivotably by the motorcycle frame (not illustrated). Thus, the swing arm 30 is pivotable in an up-down direction around its front end portion. The swing arm 30 has a rear end portion, which supports a rear wheel 32 rotatably.

Between the engine 28 and the rear wheel 32, a transmission mechanism (not illustrated) is provided to transmit power from the engine 28 to the rear wheel 32. Also, a case 34 is provided is a housing for the transmission mechanism. The case 34 houses a chain, a belt or the like, as part of the transmission mechanism. It should be noted here that the engine 28 is provided with a starter motor (not illustrated) for starting the engine 28. The engine 28 is started by rotating power from the starter motor (not illustrated).

A seat 36 is provided high above the engine 28. Underneath the seat 36, there are a battery 38 which stores electric energy to be supplied to electric components (such as the starter motor (not illustrated) and the headlight 22); a regulator 40 which adjusts an output voltage from the battery 38; and a relay 42 which turns ON/OFF the power supply from the battery 38 to the electric components.

Referring to Fig. 2, the handlebar 18 has a right and a left end portions protruding from the handlebar cover 20 in a right and a left directions respectively. Referring to Fig. 2 and Fig. 3, the switch unit 44 is provided in the handlebar 18, on the left side of the handlebar cover 20, and a grip 46 is provided in the handlebar 18, on the left side of the switch unit 44. The switch unit 44 has a lower end portion provided with the choke lever 48 for adjusting the amount of fuel supplied to the engine 28. Referring to Fig. 2, the switch unit 50 is provided in the handlebar 18, on the right side of the handlebar cover 20, and a grip 52 is provided in the handlebar 18, on the right side of the switch unit 50.

In a center portion of the handlebar cover 20, meters 54, 56 are exposed from the handlebar cover 20, facing upward. The meter 54 shows a speed of the motorcycle 10 (see Fig. 1) for example, whereas the meter 56 shows a rotation speed of the engine 28 (see Fig. 1) for example.

Referring to Fig. 4 and Fig. 5, the switch unit 44 has a box-like switch case 58, an LED 60 placed inside the switch case 58, and a supporting member 62 for supporting the LED 60 inside the switch case 58. The switch case 58 includes a forward-opening, generally bowl-shaped first case portion 64, and a rearward-opening, generally bowl-shaped second case portion 66 which is provided at a more forward position than the first case portion 64. The first case portion 64 includes a transmissive portion 68; a light shielding film 70a which is a thin film covering an outer surface of the transmissive portion 68; and a light shielding film 70b which is a thin film covering an inner surface of the transmissive portion 68. It should be noted here that the outer surface of the transmissive portion 68 is a surface in the transmissive portion 68 which is exposed to outside when the first case portion 64 and the second case portion 66 are assembled to each other. It should be noted here that the light shielding film 70a does not cover the entire region in the outer surface of the transmissive portion 68. Also, the light shielding film 70b does not cover the entire region in the inner surface of the transmissive portion 68. Details will be described later.

The transmissive portion 68 is capable of allowing light from the LED 60 to pass through. The transmissive portion 68 can be formed of a translucent material, including for example, nylon resins, acrylic resins, ABS (Acrylonitrile Butadiene Styrene) resins, or polyacetal resins. It should be noted here that the transmissive portion 68 may contain a light-scattering material. Specifically, the transmissive portion 68 may contain an opaque-white polyamide resin, for example. In this case, light which has entered the transmissive portion 68 travels while scattering through the opaque-white polyamide resin. An example of the opaque-white polyamide resin is an opaque-white nylon resin. Also, for example, the transmissive portion 68 may contain the above-described translucent material, and a light-scattering agent (such as powder of calcium carbonate, powder of titanium oxide, and a light-scattering pigment) as an additive to the translucent material. In this case, light which has entered the transmissive portion 68 travels through the translucent material while being scattered by the light-scattering agent. It should also be noted here that the transmissive portion 68 may contain a pigment which does not scatter the light.

The light shielding films 70a, 70b are formed of a material which is capable of reducing translucency. The light shielding films 70a, 70b are provided by, for example, a coating material which is capable of reducing translucency (such as a black coating material) applied onto the outer and the inner surfaces of the transmissive portion 68. The light shielding films 70a, 70b can be formed, for example, of a material which is capable of reducing translucency (of visible lights) to a level lower than that of the transmissive portion 68 and of the translucent material in the transmissive portion 68. Also, the light shielding films 70a, 70b may be formed, for example, of a material which blocks light (visible light). The light shielding films 70a, 70b are formed, for example, to have a lower translucency (of visible light) than the transmissive portion 68.

Referring to Fig. 4 and Fig. 6, the first case portion 64 includes a side wall portion 72 and a side wall portion 74 (see Fig. 6) which are opposed to each other in a right-left direction; and a main wall portion 76 which is formed between the side wall portion 72 and the side wall portion 74. The main wall portion 76 serves as a rear wall (wall which is closer to the seat 36) of the switch case 58. The side wall portions 72, 74 are substantially parallel to the fore-aft direction of the motorcycle 10 (see Fig. 1). The main wall portion 76 connects outer edges (excluding a front edge) of the side wall portion 72 and outer edges (excluding a front edge) of the side wall portion 74 with each other.

In the front edge of the side wall portion 72, a rearward recessing recess 72a is provided at a substantially center region in an up-down direction; and in the front edge of the side wall portion 72, a rearward recessing recess 72b is provided at a lower position than the recess 72a. Referring to Fig. 6, in the front edge of the side wall portion 74, a recess 74a is provided in alignment with the recess 72a in the side wall portion 72 in the right-left direction.

Referring to Fig. 3, the main wall portion 76 has through-holes 76a, 76b and 76c; and marks 76d, 76e, 76f, 76g and 76h. The through-hole 76a extends in an up-down direction at an upper-left end region of the main wall portion 76. The through-hole 76b extends in a right-left direction at a level lower than the through-hole 76a. The through-hole 76c extends in a right-left direction at a lower-left end region of the main wall portion 76.

The marks 76d, 76e, 76f, 76g and 76h are provided in an outer surface 76i of the main wall portion 76. The marks 76d, 76e are provided in an up-down relationship with each other on the right of the through-hole 76a. More specifically, the mark 76d is provided on the right of an upper end portion of the through-hole 76a whereas the mark 76e is provided on the right of a lower end portion of the through-hole 7 6a. The marks 76f, 76g are provided in a region which is lower than the through-hole 76a and higher than the through-hole 76b, in line in a right-left direction. The mark 76h is provided at a lower end region of the main wall portion 76, which is on the right of the through-hole 76c. In the present embodiment, the mark 76d, the mark 76e, the marks 76f, 76g and the mark 76h are positioned at a distance from each other in an up-down direction.

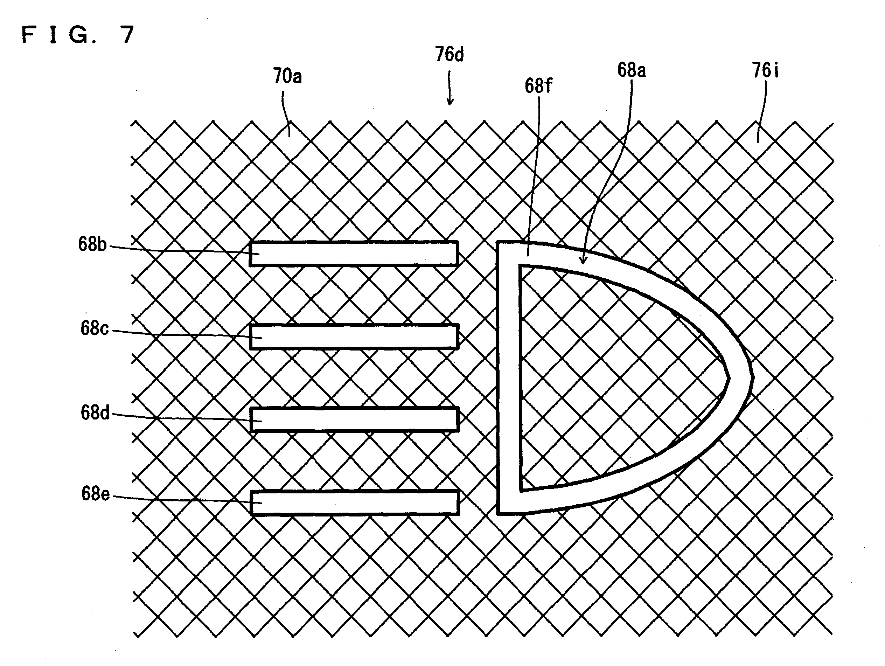

Fig. 7 is an enlarged view which shows a region in the outer surface 76i of the main wall portion 76 provided with the mark 76d. It should be noted here that in Fig. 7, hatching is provided to show the light shielding film 70a. Referring to Fig. 7, the mark 76d is constituted by predetermined regions of the outer surface 68a of the transmissive portion 68 (see Fig. 3) which are not provided with the light shielding film 70a. Specifically, the mark 76d is composed of I-shaped regions 68b, 68c, 68d and 68e which are not provided with the light shielding film 70a; and a D-shaped region 68f which is not provided with the light shielding film 70a; in the outer surface 68a. In other words, the regions 68b, 68c, 68d, 68e and 68f in the outer surface 68a is exposed from the light shielding film 70a, to form the shape of the mark 76d. The mark 76d can be made by laser marking method, for example, by first forming a light shielding film on the outer surface 68a, and then removing the light shielding film from the predetermined regions using a laser. Referring to Fig. 3, the marks 76e, 76f, 76g and 76h are also composed of a plurality of regions of an outer surface 68a of the transmissive portion 68 (see Fig. 7) which are not provided with the light shielding film 70a. Specifically, predetermined regions in the outer surface 68a are exposed to form respective shapes of the marks 76e, 76f, 76g and 76h. Light from the LED 60 enters the transmissive portion 68 (see Fig. 3) and then goes out of the marks 76d, 76e, 76f, 76g and 76h whereas emission of the light from other regions of the outer surface 68a than the marks 76d, 16e, 76f, 76g and 76h is prevented by the light shielding film 70a.

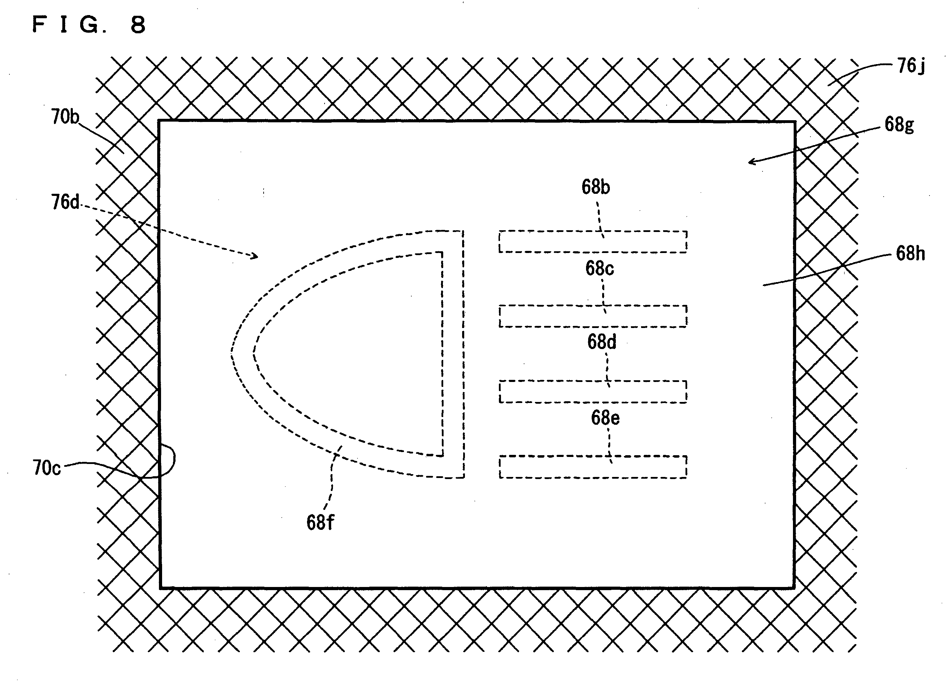

Fig. 8 is an enlarged view, showing a region of an inner surface 76j in the main wall portion 76 which corresponds to the mark 76d. It should be noted here that in Fig. 8, hatching is provided to show the light shielding film 70b. Referring to Fig. 8, the light shielding film 70b is formed so that the Light shielding film 70b does not overlap the mark 76d when the mark 76d is viewed from inside the switch unit 44 (see Fig. 5). In other words, the light shielding film 70b is formed on the inner surface 68g of the transmissive portion 68 (see Fig. 3), avoiding areas behind the mark 76d as viewed by the rider (regions opposed to the mark 76d). In the present embodiment, the light shielding film 70b is not provided in a region 68h which is a region in the inner surface 68g opposed to the mark 76d (the regions 68b, 68c, 68d, 68e and 68f) and is larger than the mark 76d. Specifically, the light shielding film 70b is formed to surround the region 68h which is larger than the mark 76d. Therefore, an inner edge 70c of the light shielding film 70b encloses a larger area than the entire mark 76d. Likewise, in the inner surface 68g of the transmissive portion 68 (see Fig. 3), the light shielding film 70b is not provided in those regions (not illustrated) opposed to the marks 76e, 76f, 76g and 76h. More specifically, in the inner surface 68g of the transmissive portion 68 (see Fig. 3), there are regions (not illustrated) which are opposed to the marks 76e, 76f, 76g and 76h, have greater areas than the marks 76e, 76f, 76g and 76h respectively, and are not provided with light shielding film 70b.

Referring to Fig. 6, a boss (fastening portion) 78 extends forward from the main wall portion 76, in an upper end region in the inside of the first case portion 64. The boss 78 is formed in a generally central region of the first case portion 64 in a right-left direction, at a position lower than the mark 76d and higher than the mark 76e. The boss 78 is formed with a threaded hole 78a.

Inside the first case portion 64, a switch 80 is provided in an upper end region, on the left of the marks 76d, 76e and the boss 78. The switch 80 is electrically connected with the headlight 22 (see Fig. 1) via a cable (not illustrated), the relay 42 (see Fig. 1), etc. The switch 80 selects High/Low beam positions of the headlight 22. Inside the first case portion 64, on the left of the marks 76d, 76e and the boss 78, a cover member 82 is provided to cover the switch 80. The cover member 82 is fixed to the main wall portion 76, with a bolt 84. The switch 80 is held by the cover member 82. It should be noted here that the switch 80 is provided ahead of the through-hole 76a (see Fig. 3).

Inside the first case portion 64, switches 86, 88 are provided in a lower end region, on the left of the mark 76h. The switches 86, 88 are arranged in an up-down direction, one above the other, on the left of the mark 76h. The switch 86 is electrically connected with the pair of flashers 24 (see

Fig. 1) via cables (not illustrated), the relay 42 (see Fig. 1), etc. The switch 86 blinks one of the flashers 24 selectively. The switch 88 is electrically connected with the warning horn 26 (see Fig. 1) via a cable (not illustrated), the relay 42 (see Fig. 1), etc. The switch 88 causes the warning horn 26 to give a warning sound. Inside the first case portion 64, on the left of the mark 76h, a cover member 90 is provided to cover the switches 86, 88. The cover member 90 is fixed to the main wall portion 76, with a bolt 92 and a bolt 94. The switches 86, 88 are held by the cover member 90. It should be noted here that the switch 88 is provided ahead of the through-hole 76c (see Fig. 3). A plurality of cables connected with the switches 80, 86 and 88 are routed through the recess 72b and then out of the first case portion 64.

Inside the first case portion 64, a boss (fastening portion) 96 extends forward from the main wall portion 76, at a lower end region. The boss 96 is provided at a position which is lower than the mark 76h and is on the right of the cover member 90. The boss 96 is formed with a threaded hole 96a.

Referring to Fig. 6, in the present embodiment, the switches 80, 86, 88, and the cover members 82, 90 are disposed at positions avoiding the backside positions of the marks 76d, 76e, 76f, 76g and 76h (positions opposed to the marks 76d, 76e, 76f, 76g and 76h). Specifically, the switches 80, 86, 88, and the cover members 82, 90 are disposed on one side (left side in the present embodiment) in a right-left direction, in the switch case 58 (see Fig. 4). With this arrangement, regions in the inner surface of the first case portion 64 (in the inner surface 76j of the main wall portion 76) opposed to the marks 76d, 76e, 76f, 76g and 76h are formed as smooth, curved or flat surfaces. It should be noted here that as has been described earlier, the inner surface of the first case portion 64 is formed with the bosses 78, 96. The bosses 78, 96 are also formed at regions avoiding the backside positions of the marks 76d, 76e, 76f, 76g and 76h. Also, the bosses 78, 96 are formed, avoiding those positions passed by straight lines connecting the LED 60 with the marks 76d, 76e, 76f, 76g and 76h.

Referring to Fig. 3 and Fig. 4, an operation member 98 is placed to fit into the through-hole 76a of the main wall portion 76. Referring to Fig. 3 through Fig. 5, the operation member 98 is a button which is pivotably supported by the first case portion 64 so that its upper portion 98a and lower portion 98b can be selectively pressed in. The switch 80 (see Fig. 6) described earlier is disposed behind the operation member 98 as viewed by the rider. The switch 80 is activated by the motorcycle rider's operation on the operation member 98 (a selective pressing on the upper portion 98a or the lower portion 98b), to switch the headlight 22 (see Fig. 1) to a high-beam or low-beam position. The marks 76d, 76e described earlier is provided in association with the operation member 98. Specifically, the marks 76d, 76e are pictorial representations of the functions of the operation member 98, and are placed at positions adjacent to the operation member 98.

Referring to Fig. 3 and Fig. 4, an operation member 100 is placed to fit into the through-hole 76b in the main wall portion 76. The operation member 100 is a knob which is supported movably in a right-left direction. Specifically, referring to Fig. 3 through Fig. 6, the operation member 100 has a knob portion 100a (Fig. 3 through see Fig. 5) and a platy supporting portion 100b (Fig. 4 through see Fig. 6) extending forward from the knob portion 100a. Referring to Fig. 3 through Fig. 5, the knob portion 100a is provided behind the main wall portion 76. Referring to Fig. 4 and Fig. 6, the supporting portion 100b is inserted through the through-hole 76b movably in a right-left direction. The knob portion 100a is mechanically connected to the switch 86 (see Fig. 6) which was described earlier, via the supporting portion 100b. The switch 86 is activated by the rider's operation on the knob portion 100a (moving in the right-left direction), to selectively turn on one in the pair of flashers 24 (see Fig. 1). The marks 76f, 76g described earlier is provided in association with the operation member 100. Specifically, the marks 76f, 76g are pictorial representations of the functions of the operation member 100, and are placed at positions adjacent to the operation member 100.

Referring to Fig. 3 and Fig. 4, an operation member 102 is placed to fit to the through-hole 76c in the main wall portion 76. The operation member 102 is a push button supported by the first case portion 64 for forward pressing operation. The switch 88 (see Fig. 6) described earlier is disposed behind the operation member 102. The switch 88 is activated by the rider's pressing operation on the operation member 102, to cause the warning horn 26 to give off a warning sound. The mark 76h described earlier is provided in association with the operation member 102. Specifically, the mark 76h is a pictorial representation of the function of the operation member 102, and is placed at a position adjacent to the operation member 102.

In the present embodiment, the operation members 98, 100 and 102 are disposed in an up-down direction. Specifically, the operation member 98 is at an upper region of the first case portion 64, the operation member 102 is at a lower region of the first case portion 64, and the operation member 100 is between the operation member 98 and the operation member 102.

Referring to Fig. 4, the second case portion 66 includes a side wall portions 104, 106 which are opposed to each other in a right-left direction; and a main wall portion 108 which is formed between the side wall portion 104 and the side wall portion 106. The side wall portions 104, 106 are substantially parallel to the fore-aft direction of the motorcycle 10 (see Fig. 1). The main wall portion 108 connects outer edges (excluding a rear edge) of the side wall portion 104 and outer edges (excluding a rear edge) of the side wall portion 106. The second case portion 66 does not allow light from the LED 60 to pass through. In the present embodiment, the first case portion 64 and the second case portion 66 are formed of different materials from each other. The second case portion 66 contains, for example, a material which is capable of reducing translucency to a level lower than that of the transmissive portion 68. The second case portion 66 can be made of a non-translucent material, for example. The second case portion 66 may be formed of a black resin, for example. An example of the black resin is a black-colored polyamide resin, and an example of the polyamide resin is nylon resin. It should be noted here that the second case portion 66 is not provided with a light shielding film in the present embodiment.

In the rear edge of the side wall portion 104, a forward recessing recess 104a is provided, at a substantially center portion in an up-down direction. The recess 104a opposes to the recess 72a in the side wall portion 72 in a fore-aft direction. In the rear edge of the side wall portion 106, a recess 106a is provided in alignment with the recess 104a in the side wall portion 104 in the right-left direction. The recess 106a opposes to the recess 74a (see Fig. 6) in the side wall portion 74 (see Fig. 6) in a fore-aft direction.

Inside the second case portion 66, a boss (fastening portion) 110 extends rearward from the main wall portion 108, at an upper end region. The boss 110 opposes to the boss 78 (see Fig. 6) in the first case portion 64 in a fore-aft direction. A through-hole 112 extends from a rear end surface of the boss 110 to an outer surface of the main wall portion 108.

Inside the second case portion 66, a boss (fastening portion) 114 extends rearward from the main wall portion 108, On the left of the boss 110 in an upper end region. The boss 114 is formed with a threaded hole 114a. It should be noted here that the boss 110, the boss 114 and the boss 78 (see Fig. 6) are provided at higher positions than the recesses 104a, 106a and the recesses 72a, 74a (see Fig. 6).

Inside the second case portion 66, a boss (fastening portion) 116 extends rearward from the main wall portion 108, at a lower end region. The boss 116 opposes to the boss 96 in the first case portion 64 in a fore-aft direction. A through-hole 118 extends from a rear end surface of the boss 116 to an outer surface of the main wall portion 108. It should be noted here that the boss 116 and the boss 96 are provided at lower positions than the recesses 104a, 106a and the recess 72a, 74a (see Fig. 6).

Referring to Fig. 5, the LED 60 has a generally cylindrical shape as a whole, and is placed in the switch case 58 so that the LED 60 has its centerline (longitudinal axis) in parallel to the fore-aft direction of the motorcycle. The LED 60 includes a substrate 60a; a device main body 60b mounted to the substrate 60a to extend rearward from the substrate 60a; a substrate case 60c which houses the substrate 60a; and a device cover 60d attached to the substrate case 60c for covering the device main body 60b.

Referring to Fig. 4 and Fig. 5, the supporting member 62 includes a platy portion 62a extending in a right-left direction, and a cylindrical cap portion 62b extending rearward from the platy portion 62a. The cap portion 62b is open in a forward direction (toward the second case portion 66). The cap portion 62b is mounted to the LED 60. Specifically, the LED 60 has its head portion (the device cover 60d) fitted into the cap portion 62b. The cap portion 62b has its front edge sealingly fitted to an outer circumferential surface of the substrate case 60c of the LED 60. Thus, the LED 60 is held by the supporting member 62 (the cap portion 62b). The arrangement protects the LED 60 from water, etc. which might otherwise enter the LED 60 from between the substrate case 60c and the device cover 60d.

Referring to Fig. 4, the platy portion 62a has a through-hole 62c and a through-hole 62d. The through-hole 62c is made at a left end region of the platy portion 62a whereas the through-hole 62d is made between the through-hole 62c and the cap portion 62b. An unillustrated fastener (a bolt, for example) is inserted from behind the platy portion 62a into the through-hole 62c, and then into the hole 114a of the boss L14, and the fastener's tip portion is fixed to the boss 114. Thus, the supporting member 62 is fixed to the second case portion 66. As a result, the LED 60 is mounted to the second case portion 66 via the supporting member 62. It should be noted here with reference to Fig. 5, that the LED 60 is disposed so as to throw light toward an inner surface of the first case portion 64. Also, the LED 60 is disposed to face an upper region of the inner surface of the first case portion 64, above the handlebar 18.

It should be noted here with reference to Fig. 6, that the switches 80, 86 and 88 are disposed along the side wall portion 74 of the first case portion 64 in the switch case 58 (see Fig. 4). Specifically, the switches 80, 86 and 88 are disposed on one side (left side in the present embodiment) in a right-left direction within the switch case 58. The arrangement makes a sufficient space available on the other side (right side in the present embodiment) in the right-left direction inside the switch case 58. The LED 60 is disposed in this space.

Referring to Fig. 5, the first case portion 64 is disposed behind the handlebar 18 whereas the second case portion 66 is disposed in front of the handlebar 18. The first case portion 64 and the second case portion 66 are assembled to each other so as to sandwich the handlebar 18 from the rear and the front, with the front edge of the first case portion 64 fitting along the rear edge of the second case portion 66. Specifically, the handlebar 18 is sandwiched between the recesses 72a, 74a and the recesses 104a, 106a (see Fig. 4) as the first case portion 64 and the second case portion 66 are assembled to each other. As understood, in the switch unit 44, the handlebar 18 penetrates the switch case 58. Referring to Fig. 5 and Fig. 6, the LED 60 is disposed in a region within the switch case 58 not penetrated by the handlebar 18. In other words, the LED 60 is disposed, avoiding a space which is to be occupied by the handlebar 18 when the switch case is mounted to the handlebar 18. Referring to Fig. 4, a bolt 120 is inserted from the front of the second case portion 66 into the through-hole 112, the through-hole 62d, and then into the hole 78a (see Fig. 6) whereas a bolt 122 is inserted from the front of the second case portion 66 into the through-hole 118 and then into the hole 96a (see Fig. 6). The bolt 120 has its tip portion fixed to the boss 78 (see Fig. 6) whereas the bolt 122 has its tip portion fixed to the boss 96 (see Fig. 6). This fixes the first case portion 64 and the second case portion 66 to each other. It should be noted here that the bosses 78, 110 are spaced from the bosses 96, 116 in an up-down direction, and the handlebar 18 is placed in this space, between the bosses 78, 110 and the bosses 96, 116.

Referring to Fig. 2, the switch unit 50 includes a switch case 124; an operation member 126 provided in the switch case 124 movably in a right-left direction; and an operation member 128 provided in the switch case 124 for inward pressing operation. The operation member 126 is connected to the headlight 22 via an unillustrated switch. The operation member 126 is operated by the motorcycle rider to turn the headlight 22 temporarily. The operation member 128 is connected with the starter motor described earlier, via an unillustrated switch. The operation member 128 is operated by the rider to start the engine 28 (see Fig. 1). It should be noted here that in the present embodiment, the operation member 126 is a knob which is supported movably in a right-left direction, and the operation member 128 is a press button.

The switch case 124 is configured similarly to the switch case 58, and an LED (not illustrated) is provided inside the switch case 124 in a similar arrangement as in the switch unit 44. The switch case 124 has a mark 124a associated with the operation member 126. The mark 124a has the same configuration as the mark 76d (see Fig. 3). The operation member 128 has a mark 128a. In the switch unit 50, light from the LED (not illustrated) which is placed inside the switch case 124 is emitted from the marks 124a and the mark 128a, illuminating the mark 124a and the mark 128a.

In the motorcycle 10, the LED 60 represents the light source, the light shielding film 70a represents the first light shielding portion; the light shielding film 70b represents the second light shielding portion; the regions (regions 68b, 68c, 68d, 68e and 68f) corresponding to the mark 76d in the outer surface 68a of the transmissive portion 68 represent the first region; the regions corresponding to the marks 76e, 76f, 76g and 76h in the outer surface 68a of the transmissive portion 68 each represent the first region; the region 68h corresponding to the mark 76d and regions corresponding to the marks 76e, 76f, 76g and 76h in the inner surface 68g of the transmissive portion 68 each represent the second region; and the cap portion 62b functions as the cap.

Hereinafter, functions and advantages of the motorcycle 10 will be described.

In the switch unit 44 of the motorcycle 10, the first case portion 64 of the switch case 58 has the transmissive portion 68 which allows light to pass through; and the light shielding film 70a which is provided in the outer surface 68a of the transmissive portion 68 and reduces translucency. Then, the regions 68b, 68c, 68d, 68e and 68f, which are regions in the outer surface 68a of the transmissive portion 68 not provided with the light shielding film 70a, constitute the mark 76d that is associated with the operation member 98. Specifically, in the switch unit 44, regions which do not constitute the mark 76d are also provided by the transmissive portion 68. In this case, the arrangement allows a sufficient amount of light to enter the transmissive portion 68 from the LED 60, enabling sufficient increase in the amount of light which is emitted from the regions 68b, 68c, 68d, 68e and 68f (the mark 76d) in the outer surface 68a of the transmissive portion 68. Likewise, the marks 76e, 76f, 76g and 76h are made of a plurality of regions in the outer surface 68a of the transmissive portion 68 which are not provided with the light shielding film 70a. Therefore, it is possible to increase the amount of light emitted from the marks 76e, 76f, 76g and 76h. As a result of the above, it is possible to illuminate the marks 76d, 76e, 76f, 76g and 76h with a sufficient amount of light. As described, according to the switch unit 44, it is possible to increase the amount of light which enters the transmissive portion 68 (translucent material) in comparison to conventional switch units in which only the marks are formed of translucent material. In the present arrangement, it is easy to ensure that a sufficient amount of light is emitted from the marks 76d, 76e, 76f, 76g and 76h.

Also, since it is possible to bring a sufficient amount of light into the transmissive portion 68, it is not necessary to dispose the LED 60 closely to the marks 76d, 76e, 76f, 76g and 76h, in order to let the marks 76d, 76e, 76f, 76g and 76h emit a sufficient amount of light. Thus, the arrangement increases freedom in positioning the LED 60. Further, since the marks 76d, 76e, 76f, 76g and 76h are formed in the switch case 58, it is not necessary to dispose the LED 60 behind the operation members 98, 100 and 102 as viewed by the rider (at positions opposing to the operation members 98, 100 and 102) even in cases where the LED 60 is disposed correspondingly to the marks 76d, 76e, 76f, 76g and 76h. Therefore, the switches 80, 86 and 88 are no longer obstacles in selecting a position for the LED 60 even in cases where the switches 80, 86 and 88 are disposed behind the operation members 98, 100 and 102. Specifically, freedom in positioning the LED 60 is higher than in cases where marks are provided in operation members. As a result of these, the arrangement increases design freedom of the switch unit 44.

In the switch unit 44, the switch case 58 is penetrable by the handlebar 18. Further, the LED 60 is disposed in a region within the switch case 58 not penetrated by the handlebar 18. In this case, the LED 60 is not an obstacle when the the switch case 58 is mounted to the handlebar 18. This makes it easy to mount the switch case 58 to the handlebar 18.

When the transmissive portion 68 contains a light-scattering material (such as an opaque-colored nylon resin and a light-scattering agent), light from the LED 60 enters the transmissive portion 68 and then scatters while travelling through the transmissive portion 68. Therefore, even if the light from the LED 60 makes its entry at an oblique angle with respect to the inner surface 68g of the transmissive portion 68, the light gets scattered within the transmissive portion 68, and is brought to the marks 76d, 76e, 76f, 76g and 76h. Also, light which enters the transmissive portion 68 but from positions on the inner surface 68g away from the marks 76d, 76e, 76f, 76g and 76h get scattered in the transmissive portion 68, and is brought to the marks 76d, 76e, 76f, 76g and 76h. As a result of these, it is now possible to bring a sufficient amount of light to the marks 76d, 76e, 76f, 76g and 76h, and therefore a sufficient amount of light is emitted from the marks 76d, 76e, 76f, 76g and 76h. As has been described, according to the switch unit 44, it is possible to reduce unwanted decrease in the amount of light emitted from the marks 76d, 76e, 76f, 76g and 76h which is caused by a light entering angle to the transmissive portion 68.

Also, the switch case 58 includes the first case portion 64 and the second case portion 66. The first case portion 64 and the second case portion 66 are designed to sandwich the handlebar 18 as they are assembled to each other. In this case, sandwiching the handlebar 18 with the first case portion 64 and the second case portion 66 makes it easy to mount the switch case 58 to the handlebar 18.

Also, the first case portion 64 and second case portion 66 sandwich the handlebar 18 from behind and front of the handlebar 18. In this case, the arrangement makes it possible to give the first case portion 64 and the second case portion 66 a greater height (dimension in an up-down direction) than switch units which include a pair of case portions for sandwiching the handlebar 18 from above and below the handlebar 18. Thus, it is possible to make a sufficient region available for formation of the marks 76d, 76e, 76f, 76g and 76h in the outer surface of the first case portion 64 (the outer surface 16i of the main wall portion 76). This makes it easy to make the marks 76d, 76e, 76f, 76g and 76h.

Once the switch case 58 has been mounted to the handlebar L8, the LED 60 is held above the handlebar 18. In this case, the arrangement reduces a potential problem that water trapped at the bottom inside the switch case 58 will flood the LED 60, since the arrangement allows the LED 60 to be above the handlebar 18 inside the switch case 58.

The second case portion 66 contains a material which is capable of reducing translucency to a lower level than that of the transmissive portion 68 of the first case portion 64. In this case, there is no need to provide a light shielding film in the second case portion 66 since the arrangement can reduce passing of light from the LED 60 through the second case portion 66. This makes it possible to manufacture the switch unit 44 at a low cost.

The first case portion 64 of the switch case 58 includes the light shielding film 70b which is provided in the inner surface 68g of the transmissive portion 68 and is capable of reducing translucency. In this case, the arrangement reduces a problem that partial loss of the light shielding film 70a will allow the light to escape from the region in the outer surface 68a of the transmissive portion 68 where the light shielding film 70a has been partially lost, for there is still the light shielding film 70b.

In the inner surface 68g of the transmissive portion 68, the light shielding film 70b is not provided in the region 68h which is a region opposed to the mark 76d (the regions 68b, 68c, 68d, 68e and 68f) and is larger than the mark 76d. In this case, the arrangement allows light to enter the region 68h which is larger than the mark 76d, and then to be emitted from the mark 76d. Likewise, in the inner surface 68g of the transmissive portion 68, the light shielding film 70b is not provided in any of the respective regions which oppose to the marks 76e, 76f, 76g and 76h and are larger than the marks 76e, 76f, 76g and 76h. In this case, the arrangement allows light to enter these regions which are larger than the marks 76e, 76f, 76g and 76h, and then to be emitted from the marks 76e, 76f, 76g and 76h. As described, according to the switch unit 44, light from the LED 60 is collected by regions which are larger than the marks 76d, 76e, 76f, 76g and 76h, making it possible to bring sufficient amounts of light to the marks 76d, 76e, 76f, 76g and 76h. By this arrangement it is possible to emit a sufficient amount of light from the marks 76d, 76e, 76f, 76g and 76h.

The LED 60 is capped with the cap portion 62b. This protects the LED 60 from water, etc.

In the switch unit 44, a plurality of marks 76d, 76e, 76f, 76g and 76h are provided in the first case portion 64. In this case, there is no need for providing a plurality of LEDs since the LED 60 serves as a common source of light for all of the marks 76d, 76e, 76f, 76g and 76h to emit light. This makes it possible to reduce cost of manufacturing the switch unit 44.

The LED 60 is not disposed behind the operation members 98, 100 or 102 (at a position opposing to the operation members 98, 100 or 102). In this case, it is easy to mount the LED 60 since none of the operation members 98, 100 and 102 are obstacles in the mounting operation.

The switches 80 and 88 are disposed behind the operation members 98 and 102 respectively (at positions opposing to the operation members 98 and 102). In this case, the arrangement allows the switches 80 and 88 to be disposed in close proximity to the respective operation members 98 and 102 within the switch case. This makes it possible to provide an increased space for the LED 60 within the switch case 58, and to further increase the freedom in positioning the LED 60.

Also, in the switch unit 44, the switches 80, 86 and 88 are disposed at positions, avoiding those positions behind the marks 76d, 76e, 76f, 76g and 76h (positions opposing to the marks 76d, 76e, 76f, 76g and 76h). In this case, the arrangement prevents undesirable cases where light which travels from the LED 60 toward the marks 76d, 76e, 76f, 76g and 76h will be blocked by the switches 80, 86 and 88. The arrangement makes it possible to illuminate these marks 76d, 76e, 76f, 76g and 76h which are disposed at a distance from each other, sufficiently with the single, common LED 60.

The switches 80, 86, 88, and the cover members 82, 90 are disposed on one side (left side in the present embodiment) in a right-left direction, inside the switch case 58 (see Fig. 4). With this arrangement, regions in the inner surface of the first case portion 64 (in the inner surface 76j of the main wall portion 76) opposed to the marks 76d, 76e, 76f, 76g and 76h are formed as smooth, curved or flat surfaces. As a result of these, it is easy to let the light from the LED 60 travel directly to the regions which oppose to the marks 76d, 76e, 76f, 76g and 76h, in the inner surface of the first case portion 64 (the inner surface 68g of the transmissive portion 68). This arrangement is capable of easily increasing the amount of light which is emitted from the marks 76d, 76e, 76f, 76g and 76h.

Also, in the switch unit 44, the LED 60 is supported by the switch case 58 via the supporting member 62. In this case, it is possible to reduce vibration transmitted from the handlebar 18 to the LED 60.

It should be noted here that in the embodiment described above, the inner surface 68g of the transmissive portion 68 is provided with the light shielding film 70b. However, the light shielding film 70b need not necessarily be provided.

Also, in the embodiment described above, the first case portion 64 and the second case portion 66 are formed of different materials from each other. However, like the first case portion 64, the second case portion may also include a transmissive portion; a light shielding film provided in outer surface of the transmissive portion; and a light shielding film provided in an inner surface of the transmissive portion.

In the embodiment described above, the switch case 58 is constituted by the first case portion 64 and the second case portion 66. However, the switch case may be constituted by three or a greater number of case portions, and further, may be constituted by a single member.

Also, in the embodiment described above, the first case portion 64 and the second case portion 66 sandwich the handlebar 18 from behind and front of the handlebar 18. However, the first case portion and the second case portion may be designed to sandwich the handlebar 18 from above and below the handlebar 18. In this case, each of the first case portion and the second case portion may include a transmissive portion; a light shielding film provided in an outer surface of the transmissive portion; and a light shielding film provided in an inner surface of the transmissive portion. Further, each of the first case portion and the second case portion may be provided with an operation member(s) and a mark(s).

Positions of the marks and the operation members are not limited to those described in the above embodiment. Further, the position of the LED 60 is not limited to the position described in the embodiment, either. The position of the LED 60 may be changed appropriately in accordance with the position of the mark.

In the embodiment described above, only one LED 60 is provided inside the switch case 58. However, a plurality of LEDs 60 may be provided inside the switch case 58. For example, another LED 60 may be provided at a lower region inside the switch case 58.

In the embodiment described above, the light source is provided by the LED 60. However, the light source may be provided by other devices. For example, the light source may be provided by a bulb which emits light by means of a filament.

Also, in the embodiment described above, the supporting member 62 is fixed to the second case portion 66 with a fastener (not illustrated) inserted through the through-hole 62c. However, the supporting member 62 may be fixed to the first case portion 64 and the second case portion 66 with the bolt 120 which is inserted into the through-hole 62d.

In the embodiment described above, description was made for a case where fasteners are provided by bolts 84, 92, 94, 120 and 122. However, other fasteners, such as pins, may be used.

The transmissive portion in the switch case may include the above-described translucent material, and a colored (e.g. white) translucent film which is formed on an outer surface of the translucent material. In this switch case, the color of the translucent film will be the color of the mark. Therefore, by forming the translucent film in the different color from the color of the light shielding film formed on the outer surface of the transmissive portion, it is possible to provide marks on the switch case in a different color than the color of the light shielding film. In this case, the motorcycle rider can easily recognize the marks by the color of the translucent film even during the day time for example, when it is generally difficult to perceive the light from the LED 60. The translucent film can be formed by, for example, a colored (e.g. white) translucent coating material applied onto the outer surface of the translucent material. An example of the coating material used as the translucent film is a transparent coating material mixed with a pigment (such as a white pigment). It should be noted here that the marks in the switch case can be formed in the same way as in the above-described embodiment, e.g., by first forming a light shielding film on an outer surface of the translucent film, and then removing predetermined region of the light shielding film using a laser.

It should be noted here that if the transmissive portion is formed of a highly transparent translucent material, the transmissive portion should preferably contain the above-described colored translucent film, or the above-described light-scattering material should be added to that translucent material.

If the transmissive portion includes the colored translucent film, the arrangement can soften the light in the translucent film, making it possible to illuminate the mark softly, at an eye-friendly brightness. Especially, when the translucent film contains a pigment which is capable of scattering light, the light is scattered in the translucent film. This makes it possible to illuminate the entire mark uniformly while softening the light sufficiently in the translucent film. Thus, it becomes possible to illuminate the marks at a more eye-friendly brightness. It should be noted here that the inner surface of the translucent material may be provided with a colored translucent film. In this case, the translucent material's outer surface need not be provided with the translucent film.

In cases where a light-scattering agent is added to the translucent material, the light is scattered in the transmissive portion 68, making it possible to soften the light which is emitted from the marks and to illuminate the entire marks uniformly. Thus, it becomes possible to illuminate the marks at an eye-friendly brightness. It should be noted here that a chemical or a physical process may be employed to roughen mark-related regions on the outer surface of the transmissive portion, instead of adding a light-scattering agent. An example of the chemical process is etching, and an example of the physical process is honing. In this case, the light is softened in the processed regions of the transmissive portion, making it possible to soften the light emitted from the marks. Thus, it becomes possible to illuminate the marks at an eye-friendly brightness.

The present invention is applicable to many different kinds of motorcycles including motor scooters and mopeds.

The present invention being thus far described in terms of preferred embodiments, it is obvious that these may be varied in many ways within the scope of the present invention. The scope of the present invention is only limited by the accompanied claims.

### LEGEND

- 10: Motorcycle
- 12: Steering shaft
- 14: Front fork
- 16: Front wheel
- 18: Handlebar
- 20: Handlebar cover
- 22: Headlight
- 24: Flasher
- 26: Warning horn
- 28: Engine
- 30: Swing arm
- 32: Rear wheel
- 34: Case
- 36: Seat
- 38: Battery
- 40: Regulator
- 42: Relay
- 44, 50: Switch units
- 46: Grip
- 48: Choke lever
- 54, 56: Meters
- 58, 124: Switch cases
- 60: LED
- 60a: Substrate
- 60b: Device main body
- 60c: Substrate case
- 60d: Device cover
- 62: Supporting member
- 62a: Platy portion
- 62b: Cap portion
- 62c, 62d, 76a, 76b, 76c: Through-holes
- 64: First case portion
- 66: Second case portion
- 68: Transmissive portion
- 70a, 70b: Light shielding films
- 72, 74, 104, 106: Side wall portions
- 72a, 72b, 74a, 104a, 106a: Recesses
- 76, 108: Main wall portions
- 76d, 76e, 76f, 76g, 76h, 124a, 128a: Marks
- 78, 96, 110, 114, 116: Bosses
- 80, 86, 88: Switches
- 82, 90: Cover members
- 84, 92, 94, 120, 122: Bolts
- 98, 100, 102, 126, 128: Operation members
- 100a: Knob portion
- 100b: Supporting portion

## Claims

1. A switch unit comprising:
a switch (44);
a light source (60);
a switch case (58) for housing the switch and the light source; and
an operation member provided in the switch case for activating the switch;
wherein the switch case includes a transmissive portion which allows light to pass through and a first light shielding portion (70a) provided in an outer surface of the transmissive portion (68) for reducing translucency,
the outer surface of the transmissive portion having a first region (76d) not provided with the first light shielding portion, for providing a mark associated with a function of the operation member,
**characterised by** a second light shielding portion (70b) provided in an inner surface of the transmissive portion for reducing translucency;
the inner surface of the transmissive portion including a second region (68h) which is opposed to the first region (76d),
the second region (68h) being not provided with the second light shielding portion and having a greater area than the first region.

2. The switch unit according to Claim 1, wherein the switch case is penetrable by a handlebar of a motorcycle, the light source being disposed in a region within the switch case not to be penetrated by the handlebar.

3. The switch unit according to Claim 1, wherein the transmissive portion contains a material capable of scattering light which travels through the transmissive portion.

4. The switch unit according to Claim 1, wherein the switch case includes a first case portion and a second case portion,
the first case portion including the transmissive portion and the first light shielding portion,
the first case portion and the second case portion being assemblable with each other to sandwich a handlebar of a motorcycle.

5. The switch unit according to Claim 4, wherein the first case portion and the second case portion sandwich the handlebar from behind and front of the handlebar.

6. The switch unit according to Claim 4, wherein the switch case as assembled to the handlebar positions the light source above the handlebar.

7. The switch unit according to Claim 4, wherein the second case portion contains a material capable of reducing translucency to a level lower than that of the transmissive portion.

8. The switch unit according to Claim 1, wherein the light source is capped.

9. The switch unit according to Claim 1, wherein the switch case is provided with a plurality of the operation members,
the outer surface of the transmissive portion having a plurality of the first regions for providing a plurality of marks associated with functions of the operation members.

10. The switch unit according to Claim 1, wherein the light source is not opposed to the operation member.

11. The switch unit according to Claim 1, wherein the switch is opposed to the operation member.

12. A motorcycle comprising the switch unit according to one of Claims 1 through 11.

## Patentansprüche

1. Eine Schaltereinheit, umfassend:
ein Schalter (44);
eine Lichtquelle (60);
ein Schaltergehäuse (58) für den Schalter und die Lichtquelle; und
ein Betätigungselement, das in dem Schaltergehäuse zum Aktivieren des Schalters vorgesehen ist;
wobei das Schaltergehäuse einen durchlässigen Abschnitt umfasst, der Licht durchlässt, und einen ersten lichtabschirmenden Abschnitt (70a), der in einer äußeren Oberfläche des durchlässigen Abschnitts (68) vorgesehen ist, um die Durchlässigkeit zu verringern, und
die äußere Oberfläche des durchlässigen Abschnitts, die einen ersten Bereich (76d) hat, der nicht mit dem ersten lichtabschirmenden Abschnitt versehen ist, zum Bereitstellen einer Markierung, die einer Funktion des Betätigungselements zugeordnet ist,
**gekennzeichnet durch** einen zweiten lichtabschirmenden Abschnitt (70b), der in einer inneren Oberfläche des durchlässigen Abschnitts vorgesehen ist, um die Durchlässigkeit zu verringern,
wobei die innere Oberfläche des durchlässigen Abschnitts einen zweiten Bereich (68h) umfasst, der dem ersten Bereich (76d) gegenüberliegt,
wobei der zweite Bereich (68h) nicht mit dem zweiten lichtabschirmenden Abschnitt versehen ist und eine größere Fläche als der erste Bereich hat.

2. Schaltereinheit nach Anspruch 1, wobei das Schaltergehäuse für eine Lenkstange eines Motorrades durchdringbar ist, wobei die Lichtquelle in einem Bereich innerhalb des Schaltergehäuses angeordnet ist, der nicht durch die Lenkstange durchdrungen wird.

3. Schaltereinheit nach Anspruch 1, wobei der durchlässige Abschnitt ein Material aufweist, das Licht streut, das sich durch den durchlässigen Abschnitt tritt.

4. Schaltereinheit nach Anspruch 1, wobei das Schaltergehäuse einen ersten Gehäuseabschnitt und einen zweiten Gehäuseabschnitt umfasst,
wobei der erste Gehäuseabschnitt den durchlässigen Abschnitt und den ersten lichtabschirmenden Abschnitt umfasst,
wobei der erste Gehäuseabschnitt und der zweite Gehäuseabschnitt derart zusammenfügbar sind, dass die Lenkstange eines Motorrades umfasst wird.

5. Schaltereinheit nach Anspruch 4, wobei der erste Gehäuseabschnitt und der zweite Gehäuseabschnitt die Lenkstange von hinten und vorne umfassen.

6. Schaltereinheit nach Anspruch 4, wobei das Schaltergehäuse, das an der Lenkstange montiert ist, die Lichtquelle über der Lenkstange positioniert.

7. Schaltereinheit nach Anspruch 4, wobei der zweite Gehäuseabschnitt ein Material aufweist, das die Durchlässigkeit auf einen Wert reduzieren kann, der niedriger ist, als der des durchlässigen Abschnitts.

8. Schaltereinheit nach Anspruch 1, wobei die Lichtquelle abgedeckt ist.

9. Schaltereinheit nach Anspruch 1, wobei das Schaltergehäuse eine Mehrzahl von Betätigungselementen aufweist,
wobei die äußere Oberfläche des durchlässigen Abschnitts eine Mehrzahl von ersten Bereichen hat, die eine Mehrzahl von Markierungen aufweisen, die Funktionen der Betätigungselemente zugeordnet sind.

10. Schaltereinheit nach Anspruch 1, wobei die Lichtquelle nicht dem Betätigungselement gegenüberliegt.

11. Schaltereinheit nach Anspruch 1, wobei der Schalter dem Betätigungselement gegenüberliegt.

12. Ein Motorrad, das die Schaltereinheit nach einem der Ansprüche 1 bis 11 umfasst.

## Revendications

1. Unité de commutation comprenant :
un commutateur (44) ;
une source lumineuse (60) ;
un boitier de commutateur (58) pour loger le commutateur et la source lumineuse ; et
un élément d'actionnement disposé dans le boitier de commutateur pour activer celui-ci ;
dans laquelle le boitier de commutateur comprend une partie transmissive permettant à une lumière de traverser et une première partie d'écran à la lumière (70a) ménagée dans une surface extérieure de la partie transmissive (68) pour réduire la translucidité ;
a surface extérieure de la partie transmissive comportant une première région (76d) non pourvue de la première partie d'écran à la lumière pour fournir un repère associé à une fonction de l'élément d'actionnement,
**caractérisée par** une seconde partie d'écran à la lumière (70d) ménagée dans une surface intérieure de la partie transmissive pour réduire la translucidité,
la surface intérieure de la partie transmissive comprenant une seconde région (68h) à l'opposé de la première région (76d) ;
la seconde région (68h) n'étant pas pourvue de la seconde partie d'écran à la lumière et ayant une aire plus importante que la première région.

2. Unité de commutation selon la revendication 1, dans laquelle le boitier de commutateur est susceptible de recevoir un guidon d'une motocyclette, la source lumineuse étant disposée dans une région à l'intérieur du boitier de commutateur ne recevant pas le guidon.

3. Unité de commutation selon la revendication 1, dans laquelle la partie transmissive est constituée par un matériau capable de disperser la lumière qui traverse cette partie transmissive.

4. Unité de commutation selon la revendication 1, dans laquelle le boitier de commutateur comprend une première partie de boitier et une seconde partie de boitier,
la première partie de boitier comprenant la partie transmissive et la première région d'écran à la lumière,
la première partie de boitier et la seconde partie de boitier étant susceptibles d'être assemblées l'une avec l'autre pour prendre en sandwich un guidon d'une motocyclette.

5. Unité de commutation selon la revendication 4, dans laquelle la première partie de boitier et la seconde partie de boitier prennent en sandwich le guidon depuis l'arrière et l'avant de ce guidon.

6. Unité de commutation selon la revendication 4, dans laquelle le boitier de commutateur, une fois assemblé avec le guidon, positionne la source lumineuse au-dessus de ce guidon.

7. Unité de commutation selon la revendication 4, dans laquelle la seconde partie de boitier est constituée par un matériau capable de réduire la translucidité à un niveau plus bas que celui de la partie transmissive.

8. Unité de commutation selon la revendication 1, dans laquelle la source lumineuse est recouverte d'un capuchon.

9. Unité de commutation selon la revendication 1, dans laquelle le boitier de commutateur est pourvu d'une pluralité d'éléments d'actionnement,
la surface extérieure de la partie transmissive comportant une pluralité de premières régions pour fournir une pluralité de repères associés à des fonctions des éléments d'actionnement.

10. Unité de commutation selon la revendication 1, dans laquelle la source lumineuse n'est pas située à l'opposé de l'élément d'actionnement.

11. Unité de commutation selon la revendication 1, dans laquelle le commutateur est situé à l'opposé de l'élément d'actionnement.

12. Motocyclette comprenant une unité de commutation selon l'un des revendications 1 à 11.
